# EUROPEAN PATENT APPLICATION

(11) **EP 1 619 417 A2**
(43) Date of publication of application: **25.01.2006**
(21) Application number: 05014741.2
(22) Date of filing: 07.07.2005
(51) Int. Cl.: F16H 55/30

(54) **Sprocket**

(30) Priority: 23.07.2004 IT BG20040034
(71) Applicant: L.L.S. Lavorazioni Leghe Speciali di Pea Dr. Ennio, 25046 Cazzago S. Martino (Brescia) (IT)
(72) Inventor: Pea, Ennio, 25069 Villa Carcina (Brescia) (IT)
(74) Representative: Gatti, Enrico

(57) **Abstract**

The present invention relates to a sprocket, for example for bicycle chains.

In a first embodiment the sprocket is characterised by comprising an outer ring formed of a light metal and having a plurality of teeth on its outer circumference, and an inner ring formed of carbon fibres or the like, and connected to said outer ring.

## Description

The present invention relates to a sprocket, for example for bicycle chains.

The known tendency of bicycle manufacturers is to seek to reduce their weight while maintaining the strength and reliability of the structure unaltered, even for a significant weight reduction.

This tendency applies in particular to racing bicycles.

A material used mainly for its lightness is carbon fibre. A drawback is however its low hardness, resulting in considerable wear when used mechanically coupled to materials of greater hardness.

Known bicycle sprockets of carbon fibre have to be replaced after about 1000 Km, because the toothing has lost its functionality due to wear.

The object of the present invention is to provide a sprocket which is lighter while at the same time being subject to reduced wear.

This object is attained according to the present invention by a sprocket characterised by comprising an outer ring formed of a light metal and having a plurality of teeth on its outer circumference, and an inner ring formed of carbon fibres or the like, and connected to said outer ring.

Advantageously the outer ring consists of titanium.

Even more advantageously, the two rings are joined together by a structural adhesive.

Preferably, the surface along which the two rings are joined together is undulated to increase the torsional resistance between the two rings.

Further characteristics of the invention are described in the dependent claims.

According to the present invention, a sprocket can be provided having a weight which has been maintained as low as possible while having a life increased to 15000-20000 Km.

The characteristics of lightness and high wear resistance of titanium have been utilized in the most stressed part of the sprocket, i.e. the toothing, while maintaining the carbon for the inner part of the sprocket.

The characteristics and advantages of the present invention will be apparent from the following detailed description of one embodiment thereof, illustrated by way of non-limiting example in the accompanying drawings, in which:
Figure 1 shows a sprocket in accordance with the present invention;
Figure 2 shows an inner ring of the sprocket of Figure 1;
Figure 3 shows an outer ring of the sprocket of Figure 1.

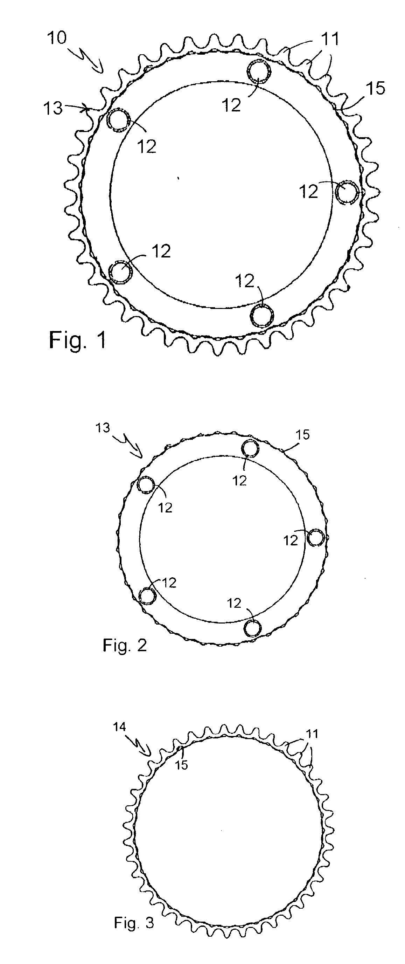

With reference firstly to Figure 1, this shows a sprocket 10 of the type typically used for bicycles.

It comprises on its outer circumference a plurality of teeth 11, for example 39 as in the figure, to cooperate with the bicycle chain, not shown. It also comprises a plurality of holes, typically 5 in number, located equidistantly, for connecting the sprocket 10 to the bicycle pedal, not shown.

The sprocket 10 comprises an inner ring 13, in which the holes 12 are provided.

The inner ring 13 is formed of carbon fibres. Aramid or other similar fibres can also be used. It is obtained from a carbon plate of about 3 mm, composed of preimpregnated 0.2 mm layers of unidirectional type disposed to render the material isotropic, and is obtained by Prepreg technology in autoclaves.

The sprocket 10 also comprises an outer ring 14 on which the teeth 11 are positioned.

The outer ring 14 is formed of light metals, the term "light metals" meaning metals such as aluminium, titanium and their alloys.

In particular a 2 mm thick sheet of grade 5 titanium to ASTM B265 was used.

The outer circumference of the inner ring 13 is substantially equal to the inner circumference of the outer ring 14, to enable them to be connected together to form the sprocket 10 of Figure 1.

To obtain a better connection it is preferable to maintain slight interference between the outer circumference of the ring 13 and the inner circumference of the ring 14.

The connection between the two rings 13 and 14 is made using a structural adhesive, suitable for hybrid metal-nonmetal adhesion.

To obtain improved coupling between the two rings 13 and 14, and in particular to obtain greater resistance to the torsional forces which can arise between the two rings, the outer circumference of the ring 13 and the inner circumference of the ring 14 present an undulated profile enabling them to be fitted one into the other.

The production process comprises cutting the inner ring 13 from a carbon plate and cutting the outer ring 14 from a titanium sheet.

The two pieces are glued together by placing them on a ground surface, the adhesive then being polymerized for 4 or 5 days at ambient temperature or for a lesser time in autoclave.

A sprocket with 39 teeth for bicycles has been described, however the described technology is also applicable to sprockets with any number of teeth, to motorcycle sprockets and to sprockets in general, in all cases where a lightweight but at the same time hard wearing sprocket is required.

Grade 5 titanium has been used to make the outer ring 14, however other grades of similar wear resistance and lightness could be used, while for the outer ring 13 other carbon arrangements could be used, provided they guarantee structural strength.

The connection between the two rings 13 and 14 is made using a structural adhesive.

According to a first alternative, at least a portion of the inner ring 13 can be arranged superposed on at least a portion of the outer ring 14, for example by reducing the thickness of these two portions, they then being connected together mechanically by screws or other fixings.

According to a second alternative, a plurality of holes (typically 5) can be arranged straddling the juncture between the two rings 13 and 14, to obtain a semicircle on the inner ring 13 and a semicircle on the outer ring 14. Mechanical fixing means, such as screws, bolts, rivets, are passed through the holes to connect the two rings together.

## Claims

1. A sprocket **characterised by** comprising an outer ring formed of a light metal and having a plurality of teeth on its outer circumference, and an inner ring formed of carbon fibres or the like, and connected to said outer ring.

2. A sprocket as claimed in claim 1, **characterised in that** said outer ring is constructed of titanium.

3. A sprocket as claimed in claim 1, **characterised in that** said inner ring is connected to said outer ring by a structural adhesive.

4. A sprocket as claimed in claim 1, **characterised in that** at least a portion of said inner ring is superposed on at least a portion of said outer ring, said two portions being connected together mechanically.

5. A sprocket as claimed in claim 4, **characterised in that** said two portions are connected together mechanically by screws.

6. A sprocket as claimed in claim 1, **characterised by** arranging a plurality of holes straddling said inner ring and said outer ring, and by comprising a fixing element passing through each of said holes.

7. A sprocket as claimed in claim 1, **characterised in that** said inner ring comprises at least one first connection means on its outer circumference, said outer ring comprising at least one second connection means on its inner circumference to cooperate with said first connection means, in order to increase the torsional resistance between said two rings.

8. A sprocket as claimed in claim 1, **characterised in that** said inner ring comprises a first series of undulations on its outer circumference, said outer ring comprising a second series of undulations on its inner circumference arranged to cooperate with said first series of undulations, in order to increase the torsional resistance between said two rings.
